# EUROPÄISCHE PATENTSCHRIFT

(11) **EP 1 881 909 B1**
(45) Veröffentlichungstag und Bekanntmachung des Hinweises auf die Patenterteilung: **29.08.2018**
(21) Anmeldenummer: 06724074.7
(22) Anmeldetag: 06.04.2006
(51) Int. Cl.: B60L 5/00

(54) **LINIENLEITER UND SYSTEM ZUR BERÜHRUNGSLOSEN ENERGIEÜBERTRAGUNG**
PILOT LINE AND A SYSTEM FOR CONTACT-LESS ENERGY TRANSMISSION
LIGNE PILOTE ET SYSTEME POUR TRANSMISSION D'ENERGIE SANS CONTACT

(30) Priorität: 11.05.2005 DE 102005022649
(43) Veröffentlichungstag der Anmeldung: 30.01.2008
(73) Patentinhaber: SEW-EURODRIVE GmbH & Co. KG, 76646 Bruchsal (DE)
(72) Erfinder: BECKER, Günter, 76684 Östringen (DE); SCHMIDT, Josef, 76676 Graben-Neudorf (DE)
(74) Vertreter: Tüngler, Eberhard
(86) Internationale Anmeldenummer: PCT/EP2006/003128
(87) Internationale Veröffentlichungsnummer: WO 2006/119830

(56) Entgegenhaltungen:
- DE-A1- 10 013 767
- DE-C1- 19 915 489
- DE-U1- 20 013 189
- FR-A- 2 387 138

## Beschreibung

Die Erfindung betrifft ein **System mit Linienleiter.**

Aus der DE 103 12 284 ist ein flacher Übertragerkopf für ein bewegbares Teile eines Systems zur berührungslosen Energieübertragung bekannt, wobei das Primärleitersystem einen als Linienleiter ausgeführten Hinleiter und Rückleiter umfasst. Nachteilig ist, dass die Verlegung des Linienleiters aufwendig und kostspielig ist.

**Aus der** DE 200 13 189 U1 **ist als nächstliegender Stand der Technik eine Leitungsanordnung bekannt.**

**Aus der** DE 199 15 489 C1 **ist ein Schienenelement für eine Flurtransportanlage bekannt.**

**Aus der** DE 100 13 767 A1 **ist ein Bodentransportsystem mit einem Versorgungs- und Leitsystem zur berührungslosen Energieübertragung und berührungslosen Führung von Elektrotransportfahrzeugen bekannt.**

**Aus der** FR 2 387 138 A **ist ein elektrisches Versorgungssystem für Straßenfahrzeuge bekannt.**

Der Erfindung liegt daher die Aufgabe zugrunde, einen Linienleiter und ein System weiterzubilden, die Montage- und/oder Installationskosten verringerbar sind.

Erfindungsgemäß wird die Aufgabe **bei dem System nach den in Anspruch 1** angegebenen Merkmalen gelöst.

Von Vorteil ist dabei, dass kein Vergießen mit Vergussmasse notwendig ist, das Einlegen des Profils einfach und daher kostengünstig ist und der Linienleiter mechanisch geschützt ist, insbesondere sogar überfahrbar ausbildbar ist.

**Erfindungsgemäß** umfasst das Profil an seiner Außenseite Widerhaken zur formschlüssigen Verbindung mit der Nut. Von Vorteil ist dabei, dass Unebenheiten und Toleranzen der Nut ausgleichbar sind und eine gute stabile Verbindung des Profils in der Nut herstellbar ist.

**Erfindungsgemäß** sind das Profil zwei Teilbereiche umfasst, die über einen elastischen Bereich verbunden. Von Vorteil ist dabei, dass das Profil derart aufklappbar gestaltbar ist, dass der Linienleiter zwischen die Teilbereiche einbringbar ist vor der Verlegung in den Boden.

**Erfindungsgemäß** sind die Teilbereiche an dem dem elastischen Bereich gegenüberliegenden Ende formschlüssig verbindbar. Von Vorteil ist dabei, dass der Linienleiter sicher umschließbar ist und somit gut schützbar ist.

Bei einer vorteilhaften Ausgestaltung erstreckt sich das Profil sich im Wesentlichen über die gesamte Länge des in der Nut verlegten Linienleiters. Von Vorteil ist dabei, dass kein Vergießen mit Vergussmasse mehr notwendig ist.

Bei einer vorteilhaften Ausgestaltung umfasst das Profil zumindest einen Hohlraum, der parallel zum Linienleiter ausgedehnt. Von Vorteil ist dabei, dass thermische Ausdehnungen kompensierbar sind.

Bei einer vorteilhaften Ausgestaltung ist das Profil derart vorgesehen ist, dass es von einem bewegbaren Teil überfahrbar. Von Vorteil ist dabei, dass das Profil derart stabil vorsehbar ist und somit die Sekundärwicklung sehr nahe heranführbar ist, abgesehen von einem Luftspalt.

Bei einer vorteilhaften Ausgestaltung ist das Profil in der Nut des Bodens verklemmt. Von Vorteil ist dabei, dass eine stabile Verbindung erreichbar ist.

Bei einer vorteilhaften Ausgestaltung ist das Profil aus Kunststoff. Von Vorteil ist dabei, dass ein kostengünstiger Werkstoff mit guten Isolationseigenschaften verwendbar ist.

Bei einer vorteilhaften Ausgestaltung ist das Profil als Strangguss gefertigt. Von Vorteil ist dabei, dass die Herstellung kostengünstig ist.

**Wichtig ist bei einem solchen System,** dass es zur berührungslosen Energieübertragung vorgesehen ist, wobei es zumindest einen langgestreckten, im Boden verlegten Linienleiter, der Teil des Primärleitersystems umfasst und zumindest ein bewegbares Teil, das auf dem Boden entlang des Linienleiters bewegbar ist, wobei das bewegbare Teil eine Sekundärspule umfasst, die induktiv gekoppelt ist mit dem Linienleiter,
**wobei** der Boden eine Nut aufweist, in welcher der von einem Profil umgebene Linienleiter verlegt ist. Von Vorteil ist dabei, dass die Herstellung der Anlage samt dem System schnell und einfach und somit auch kostengünstig ist.

Bei einer vorteilhaften Ausgestaltung prägt eine elektrische Einspeisevorrichtung einen mittelfrequenten Wechselstrom, insbesondere mit 20kHz bis 100kHz, in den Linienleiter ein. Von Vorteil ist dabei, dass IGBT als Leistungshalbleiter einer Endstufe für die Einspeisung verwendbar sind. Auch andere ähnlich wirksame Leistungshalbleiter sind verwendbar. Die Schaltfrequenz ist nicht so hoch, dass die Verluste überhand nehmen, sie ist aber hoch genug, um über die induktive Kopplung Energie in ausreichendem Maße zu übertragen. Somit sind nur geringe Energieverluste bei der Anordnung vorhanden.

Bei einer vorteilhaften Ausgestaltung umfasst das Primärleitersystem zumindest einen Hinleiter und einen Rückleiter. Von Vorteil ist dabei, dass ein einfach aufgebautes System ausführbar ist.

Bei einer vorteilhaften Ausgestaltung ist die Sekundärspulenwicklung flach ausgeführt, wobei die Wicklungsachse in Richtung der Normalenrichtung der Bodenoberfläche im Bereich der Nut ausgerichtet ist. Von Vorteil ist dabei, dass das bewegbare Teil als flach über dem Boden vorgesehener Wage ausführbar ist.

Weitere Vorteile ergeben sich aus den Unteransprüchen.

Die Erfindung wird nun anhand von Abbildungen näher erläutert:

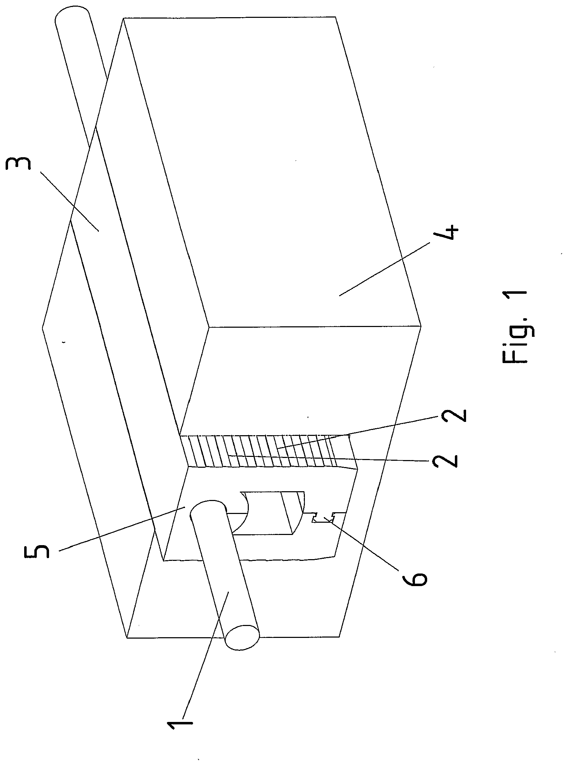

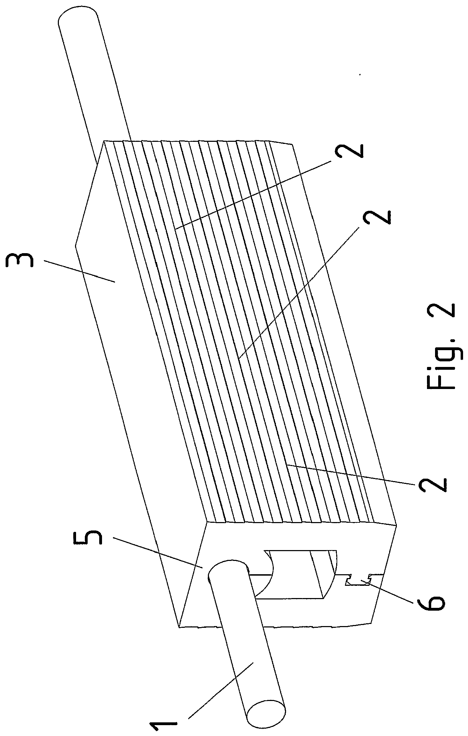

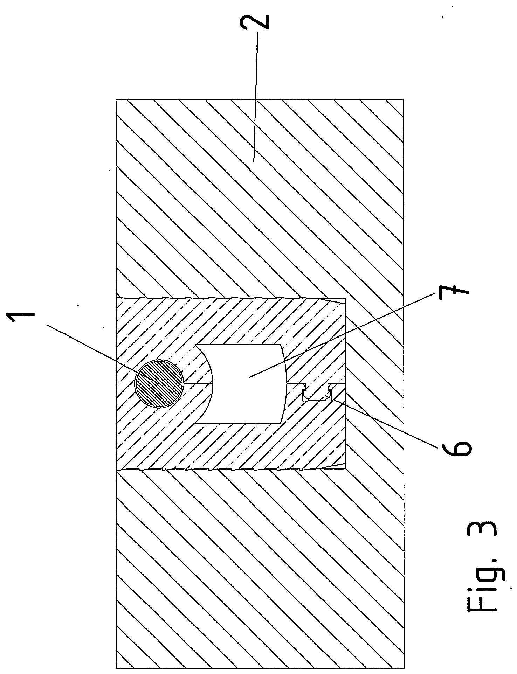

In der Figur 1 ist eine erfindungsgemäße Vorrichtung mit Boden und in Figur 2 ohne Boden symbolisch skizziert. In Figur 3 ist eine zu Figur 1 zugehörige Schnittansicht gezeigt.

Der Linienleiter 1 ist in einem Profil 3 eingelegt, das in einer Nut des Bodens 4, beispielsweise Beton oder Estrich oder Holz, vorgesehen ist.

Das Profil 3 weist an seinen Außenseiten Widerhaken 2 auf, mit denen es in der Nut verklemmbar ist. Im Bereich der Widerhaken sind Unebenheiten der Nut des Bodens, in welche sich die Widerhaken formschlüssig einklemmen. Unebenheiten und Toleranzen in der Nutbreite werden von den Widerhaken 2 aufgenommen.

Das Profil 3 weist zwei Teilbereiche auf, die über einen elastisch ausgeformten Bereich 5 des Profils 3 zusammengehalten sind. Voreinlegen des Profils 3 in die Nut des Bodens 4 wird der Linienleiter 1 in das Profil 3 eingelegt, indem die zwei Teilbereiche voneinander ein wenig weggeklappt werden und dann der Linienleiter 1 eingelegt wird. Der elastisch ausgeformte Bereich 5 ist dabei etwa als ungefährer Drehpunkt zu sehen.

Die beiden Teilbereiche werden mit einer Formschlussverbindung 6, die als Einklipsverbindung ausgeführt ist, auf der dem elastischen Bereich 5 gegenüberliegenden Seite geschlossen.

Von den Teilbereichen ist auch ein parallel zum Linienleiter verlaufender Hohlraum 7 umschlossen, das zur Aufnahme von Längenänderungen des Linienleiters 1 vorgesehen ist. Solche Längenänderungen können beispielsweise durch thermische Änderungen verursacht sein, die im Linienleiter bedingt durch Ohmsche Wärme auftreten.

Das Profil erstreckt sich über große Längen parallel zum Linienleiter, insbesondere über die gesamte Länge der Nut im Boden. Auf diese Weise muss vorteiligerweise keine Vergussmasse eingebracht werden. Ein entsprechend zugehöriger zusätzlicher Arbeitsgang entfällt.

Weiterer Vorteil ist, dass der Linienleiter 1 einfach und leicht austauschbar ist, insbesondere ohne mechanische Stemmarbeiten oder ähnlichen Aufwand.

Das Profil 3 gibt dem Linienleiter auf der Oberseite mechanischen Schutz, um ein Überfahren der Nut im Boden zu ermöglichen.

Das Verlegen ist äußerst einfach und schnell ausführbar, da das Profil samt Linienleiter 1 verlegt wird.

Das Profil 3 ist vorzugsweise aus einem Kunststoff ausgeführt und als Strangguss herstellbar.

### Bezugszeichenliste

1 Linienleiter
2 Widerhaken
3 Profil
4 Boden
5 elastischer Bereich des Profils
6 Formschlussverbindung
7 Hohlraum

## Patentansprüche

1. System mit Linienleiter (1),
**wobei** mindestens einer der Linienleiter (1) mit einem ihn umgebenden Profil (3) in einer Nut im Boden (4) vorgesehen ist,
**wobei das Profil** (**3**) **zwei Teilbereiche umfasst, die über einen elastischen Bereich (5) verbunden sind,**
**dadurch gekennzeichnet, dass**
**das Profil (3) an seiner Außenseite Widerhaken (2) umfasst zur formschlüssigen Verbindung mit der Nut,**
**wobei die Teilbereiche an dem dem elastischen Bereich (5) gegenüberliegenden Ende formschlüssig verbunden sind,**
**wobei kein Vergießen mit Vergussmasse ausgeführt ist, wobei der Linienleiter mechanisch geschützt ist und sogar überfahrbar ausgebildet ist.**

2. System nach Anspruch 1,
**dadurch gekennzeichnet, dass**
das Profil (3) sich im Wesentlichen über die gesamte Länge des in der Nut verlegten Linienleiters (1) erstreckt.

3. System nach mindestens einem der vorangegangenen Ansprüche,
**dadurch gekennzeichnet, dass**
das Profil (3) zumindest einen Hohlraum (7) umfasst, der parallel zum Linienleiter (1) ausgedehnt ist.

4. System nach mindestens einem der vorangegangenen Ansprüche,
**dadurch gekennzeichnet, dass**
das Profil (3) derart vorgesehen ist, dass es von einem bewegbaren Teil überfahrbar ist.

5. System nach mindestens einem der vorangegangenen Ansprüche,
**dadurch gekennzeichnet, dass**
das Profil (3) in der Nut des Bodens (4) verklemmt ist.

6. System nach mindestens einem der vorangegangenen Ansprüche,
**dadurch gekennzeichnet, dass**
das Profil (3) aus Kunststoff ist.

7. System nach mindestens einem der vorangegangenen Ansprüche,
**dadurch gekennzeichnet, dass**
das Profil (3) als Strangguss gefertigt ist.

8. System zur berührungslosen Energieübertragung **nach mindestens einem der vorangegangenen Ansprüche,**
umfassend zumindest einen langgestreckten, im Boden (4) verlegten Linienleiter (1), der Teil des Primärleitersystems ist und zumindest ein bewegbares Teil, das auf dem Boden (4) entlang des Linienleiters (1) bewegbar ist,
wobei das bewegbare Teil eine Sekundärspule umfasst, die induktiv gekoppelt ist mit dem Linienleiter (1),
**wobei** der Boden (4) eine Nut aufweist, in welcher der von einem Profil (3) umgebene Linienleiter (1) verlegt ist.

9. System nach Anspruch 8,
**dadurch gekennzeichnet, dass**
eine elektrische Einspeisevorrichtung einen mittelfrequenten Wechselstrom, insbesondere mit 20kHz bis 100kHz, in den Linienleiter (1) einprägt.

10. System nach Anspruch 8 oder 9,
**dadurch gekennzeichnet, dass**
das Primärleitersystem zumindest einen Hinleiter und einen Rückleiter umfasst.

11. System nach einem der Ansprüche 8 bis 10,
**dadurch gekennzeichnet, dass**
die Sekundärspulenwicklung flach ausgeführt ist, wobei die Wicklungsachse in Richtung der Normalenrichtung der Bodenoberfläche im Bereich der Nut ausgerichtet ist.

## Claims

1. A system having a line conductor (1),
wherein at least one of the line conductors (1) is provided with a profile (3) surrounding it in a groove in the floor (4),
wherein the profile (3) comprises two sub-regions which are connected via a resilient region (5), **characterised in that**
the profile (3) comprises barbs (2) on it outer side for form-fitting connection to the groove,
wherein the sub-regions are connected with form fit at the end opposite the resilient region (5),
wherein sealing with a casting compound is not carried out, wherein the line conductor is mechanically protected and is even designed to be traversable.

2. The system according to Claim 1,
**characterised in that**
the profile (3) extends substantially over the entire length of the line conductor (1) laid in the groove.

3. The system according to at least one of the preceding claims,
**characterised in that**
the profile (3) comprises at least one cavity (7) which is extended parallel to the line conductor (1).

4. The system according to at least one of the preceding claims,
**characterised in that**
the profile (3) is provided such that it is traversable by a movable part.

5. The system according to at least one of the preceding claims,
**characterised in that**
the profile (3) is clamped in the groove in the floor (4) .

6. The system according to at least one of the preceding claims,
**characterised in that**
the profile (3) is made of plastics material.

7. The system according to at least one of the preceding claims,
**characterised in that**
the profile (3) is manufactured as a continuous casting.

8. A system for contactless energy transmission according to at least one of the preceding claims,
comprising at least one elongated line conductor (1), which is laid in the floor (4) and is part of the primary conductor system, and at least one movable part, which is movable along the line conductor (1) on the floor (4),
wherein the movable part comprises a secondary coil, which is inductively coupled to the line conductor (1),
wherein the floor (4) has a groove in which the line conductor (1) surrounded by a profile (3) is laid.

9. The system according to Claim 8,
**characterised in that**
an electrical supply device impresses a medium-frequency alternating current, in particular of 20kHz to 100kHz, into the line conductor (1).

10. The system according to Claim 8 or 9,
**characterised in that**
the primary conductor system comprises at least one forward conductor and one return conductor.

11. The system according to one of Claims 8 to 10,
**characterised in that**
the secondary coil winding is designed to be flat, wherein the winding axis is aligned in the direction of the normal direction of the floor surface in the region of the groove.

## Revendications

1. Système comprenant des conducteurs de ligne (1),
au moins l'un des conducteurs de ligne (1) étant prévu dans une rainure dans le sol (4) avec un profilé (3) qui l'entoure,
le profilé (3) comprenant deux zones partielles reliées par une zone élastique (5), **caractérisé en ce**
**que** le profilé (3) comprend sur son côté extérieur des barbillons (2) pour une liaison positive avec la rainure,
les zones partielles étant reliées positivement à l'extrémité opposée à la zone élastique (5),
aucun scellement par masse de scellement n'étant réalisé, le conducteur de ligne étant protégé mécaniquement et même conçu pour supporter la circulation.

2. Système selon la revendication 1,
**caractérisé en ce**
**que** le profilé (3) s'étend sensiblement sur toute la longueur du conducteur de ligne (1) posé dans la rainure.

3. Système selon au moins l'une des revendications précédentes,
**caractérisé en ce**
**que** le profilé (3) comprend au moins une cavité (7) qui s'étend parallèlement au conducteur de ligne (1).

4. Système selon au moins l'une des revendications précédentes,
**caractérisé en ce**
**que** le profilé (3) est prévu de sorte à supporter la circulation d'une partie mobile.

5. Système selon au moins l'une des revendications précédentes,
**caractérisé en ce**
**que** le profilé (3) est serré dans la rainure du sol (4).

6. Système selon l'une des revendications précédentes,
**caractérisé en ce**
**que** le profilé (3) est en matière plastique.

7. Système selon au moins l'une des revendications précédentes,
**caractérisé en ce**
**que** le profilé (3) est fabriqué en coulée continue.

8. Système de transmission d'énergie sans contact selon au moins l'une des revendications précédentes,
comprenant au moins un conducteur de ligne allongé (1) posé dans le sol (4), qui fait partie du système de conducteurs primaires et au moins une partie mobile qui est mobile sur le sol (4) le long du conducteur de ligne (1),
la partie mobile comprenant une bobine secondaire qui est couplée par induction au conducteur de ligne (1),
le sol (4) présentant une rainure dans laquelle le conducteur de ligne (1) entouré d'un profilé (3) est posé.

9. Système selon la revendication 8,
**caractérisé en ce**
**qu'**un dispositif d'alimentation électrique applique un courant alternatif à moyenne fréquence, en particulier de 20 kHz à 100 kHz, dans le conducteur de ligne (1).

10. Système selon la revendication 8 ou 9,
**caractérisé en ce**
**que** le système de conducteurs primaires comprend au moins un conducteur aller et un conducteur retour.

11. Système selon l'une des revendications 8 à 10,
**caractérisé en ce**
**que** l'enroulement de bobine secondaire est plat, l'axe d'enroulement étant orienté dans la direction normale à la surface du sol dans la zone de la rainure.
